# EUROPÄISCHE PATENTANMELDUNG

(11) **EP 2 706 141 A1**
(43) Veröffentlichungstag der Anmeldung: **12.03.2014**
(21) Anmeldenummer: 13182269.4
(22) Anmeldetag: 29.08.2013
(51) Int. Cl.: D21G 1/02, F16C 32/06

(54) **Hydrostatisches Gleitlager**

(30) Priorität: 05.09.2012 DE 102012215712
(71) Anmelder: ADVO-Carillon UG (haftungsbeschränkt), 73760 Ostfildern (DE)
(72) Erfinder: Brandstetter, Jochen, 73230 Kirchheim-Lindorf (DE)
(74) Vertreter: Kohler Schmid Möbus

(57) **Zusammenfassung**

Die Erfindung betrifft ein hydrostatisches Gleitlager (1) zur Lagerung einer umlaufenden Welle, mit einem Gleitschuh (2), der eine gekrümmte Gleitschuhoberfläche (2a) zur Auflage der Welle aufweist, und mit einem Gleitlagerkörper (3), wobei der Gleitschuh (2) an einem in dem Gleitlagerkörper (3) verschiebbar geführten Lagerteil (10) gelagert ist. Das hydrostatische Gleitlager (1) weist eine mechanische Hubeinrichtung (8, 11, 12) auf, mit der das Lagerteil (10) relativ zum Gleitlagerkörper (3) anhebbar und absenkbar ist. Auf diese Weise kann eine präzise Einstellung der Bauhöhe des Gleitlagers (1) bzw. einer präzise Höheneinstellung eines Endanschlags für die Lagerung der Welle realisiert werden.

## Beschreibung

Die vorliegende Erfindung betrifft ein hydrostatisches Gleitlager für die Lagerung einer umlaufenden Welle, beispielsweise einer Feinmühle oder dergleichen, mit einem Gleitschuh, der eine gekrümmte Gleitschuhoberfläche zur Auflage der Welle aufweist, und mit einem Gleitlagerkörper, wobei der Gleitschuh an einem in dem Gleitlagerkörper verschiebbar geführten Lagerteil gelagert ist.

Ein hydrostatisches Gleitlager bzw. ein hydrostatischer Gleitschuh, der an einem Gleitlagerkörper in einem Mittenabschnitt z.B. über eine Kugel abgestützt ist, ist beispielsweise aus der DE 26 15 471 A bekannt geworden. Der dort beschriebene hydrostatische Gleitschuh weist an der Gleitschuhoberfläche eine der Welle zugewandte Drucktasche auf, wobei die Gleitschuhoberfläche an den Rändern der Drucktasche vorzugsweise einen etwas größeren Krümmungsradius als der Krümmungsradius der Welle aufweist. Der in der DE 26 15 471 A beschriebene Gleitschuh weist in der Mitte der Drucktasche eine mit den Rändern in ein- und derselben gekrümmten Fläche liegende Erhebung auf.

Im Internet ist unter dem Link "www.skf.com/files/100119.pdf" ein Prospekt mit dem Titel "Hydrostatic Shoe Bearing Arrangements" der Firma "SKF Group" abrufbar, in dem hydrostatische Gleitlager z.B. für Feinmühlen beschrieben werden. Dort wird eine Anordnung mit mehreren Gleitlagern bzw. Gleitschuhen zur Abstützung einer Welle mit großem Durchmesser vorgeschlagen, bei der neben so genannten "Master"-Gleitschuhen, deren Position radial fixiert ist, auch so genannte "Slave"-Gleitschuhe vorgesehen sind, welche mit den "Master"-Gleitschuhen bzw. Gleitlagern in Fluidverbindung stehen. Die "Slave"-Gleitschuhe können in radialer Richtung, d.h. zum Zentrum der Welle hin und von dieser weg bewegt werden, indem ein Lagerteil, an dem der Gleitschuh über eine Kugel gelagert ist, in der Art eines Kolbens verschoben wird.

### Aufgabe der Erfindung

Es ist die Aufgabe der vorliegenden Erfindung, ein hydrostatisches Gleitlager der eingangs genannten Art dahingehend weiterzubilden, dass eine präzise Einstellung der Bauhöhe des Gleitlagers für die Unterstützung der umlaufenden Welle ermöglicht wird.

### Gegenstand der Erfindung

Diese Aufgabe wird erfindungsgemäß gelöst durch ein hydrostatisches Gleitlager, welches eine mechanische Hubeinrichtung aufweist, mit der das Lagerteil relativ zum Gleitlagerkörper (gesteuert bzw. stufenlos) anhebbar und absenkbar ist. Durch die mechanische Hubeinrichtung kann eine präzise Einstellung und Fixierung der Höhe des Gleitlagers, genauer gesagt der Höhe des Lagerteils und damit des Endanschlags für den Gleitschuh erfolgen. Die Höhe des Gleitlagers lässt sich hierbei stufenlos (typischer Weise über einen vergleichsweise geringen maximalen Hub im Bereich von ca. 1 bis 2 Millimetern) einstellen. Im Gegensatz zu einer mittels einer mechanischen Hubeinrichtung erfolgenden Einstellung der Bauhöhe des Gleitlagers ist bei Gleitlagern, wie sie in dem oben genannten Artikel dargestellt sind, entweder die Bauhöhe konstant ("Master"-Gleitlager) oder die Bauhöhe stellt sich über die hydraulische Kopplung ein ("Slave"-Gleitlager).

Bei einer Ausführungsform weist die Hubeinrichtung ein Getriebe auf. Durch das Getriebe kann eine Feinabstimmung des gewünschten Hubs mit einer Präzision von Zehnteln oder ggf. von Hundertsteln von Millimetern erfolgen. Typischer Weise wird die Höhe des Gleitlagers vor der Lagerung der umlaufenden Welle eingestellt und während der Lagerung der umlaufenden Welle nicht mehr verändert.

In einer Weiterbildung dieser Ausführungsform weist das Getriebe eine antreibbare Gewindespindel auf, wobei als Antrieb zur Erzeugung der Hubbewegung ein herkömmlicher Drehmotor verwendet werden kann.

Bei einer vorteilhaften Weiterbildung weist das Gleitlager einen Zahnkranz auf, in den die Gewindespindel eingreift. Der Zahnkranz weist ein Innengewinde auf, das mit einem Außengewinde des Lagerteils in Eingriff steht. Auf diese Weise lässt sich eine Drehbewegung des Zahnkranzes in eine lineare Bewegung des Lagerteils bzw. des Gleitschuhs umsetzen. Die Gewindesteigung legt die Übersetzung, d.h. den Verschiebeweg (bzw. den Hub) des Lagerteils fest, der bei der Drehung des Zahnkranzes um einen vorgegebenen Winkel auftritt. Zur Erzeugung der Hubbewegung verläuft die Gewindespindel dabei durch den Gleitlagerkörper hindurch in den Bereich des Lagerteils. Die Spindelachse der Gewindespindel verläuft hierbei typischer Weise nicht senkrecht zu einer Außenkante der in der Draufsicht rechteckigen Gleitschuhoberfläche, sondern unter einem Winkel von zwischen ca. 40° und ca. 50° zu einer jeweiligen Kante. Zur Vereinfachung des Antriebs des Lagerteils verläuft die Spindelachse in der Regel in einer horizontalen Ebene.

Bei einer alternativen Ausführungsform ist an dem Gleitlager ein Gewindeteil mit einem Innengewinde vorgesehen, in das ein Außengewinde der Gewindespindel eingreift. Das Gewindeteil kann in der Art einer Spindel-Mutter aufgebaut sein. Wird die Gewindespindel angetrieben, wird die Drehbewegung der Gewindespindel über den Gewindetrieb in eine Linearbewegung des Gewindeteils übertragen. Das Gewindeteil kann mittelbar oder unmittelbar mit dem Lagerteil verbunden sein, sodass die Linearbewegung des Gewindeteils auf das Lagerteil übertragen wird. Hierdurch kann das Lagerteil relativ zum Gleitlagerkörper angehoben bzw. abgesenkt werden. Alternativ dazu kann das Lagerteil selbst als Gewindeteil ausgebildet sein. In diesem Fall bewirkt eine Drehung der Gewindespindel direkt ein Anheben bzw. Absenken des Lagerteils und somit des an dem Lagerteil gelagerten Gleitschuhs.

In einer vorteilhaften Ausführungsform ist das Gewindeteil an der Gewindespindel hydrostatisch gelagert. Durch die hydrostatische Lagerung kann ein Ölfilm zwischen dem Außengewinde der Gewindespindel und dem Innengewinde des Gewindeteils ausgebildet werden. Hierdurch wird die Drehung der Gewindespindel relativ zu dem Gewindeteil erleichtert, was die Reibung und damit den Materialverschleiß des Gewindetriebs vermindert. Dies ist insbesondere günstig, da das Gewicht der von dem Gleitschuh aufgenommenen Welle je nach Anwendungsfall ggf. bei mehreren Tonnen liegt, was ein Anheben bzw. Absenken des Lagerteils mittels eines herkömmlichen Gewindetriebs praktisch nahezu unmöglich macht. Die hydrostatische Lagerung kann insbesondere mit Hilfe von an dem Gewindeteil vorgesehenen Drucktaschen realisiert werden, die über in dem Gewindeteil befindliche Hydraulik-Kanäle mit einem Hydraulikfluid beaufschlagt werden können, um einen Ölfilm zu bilden.

Eine konstruktiv besonders einfache Realisierung des Gleitlagers kann dadurch erreicht werden, dass die Gewindespindel direkt oder über einen Riemen mit einem Antriebsmotor, typischer Weise mit einem Drehmotor, koppelbar ist. Der Riemen kann auch in Form eines Zahnriemens ausgebildet sein.

Bei einer weiteren Ausführungsform weist das Lagerteil mindestens einen Kanalabschnitt zur Versorgung mindestens einer Drucktasche an der Gleitschuhoberfläche mit einem Hydraulikfluid auf. Der Kanalabschnitt kann insbesondere zur zentralen Versorgung von mehreren in den Ecken der Gleitschuhoberfläche gebildeten Drucktaschen mit einem Hydraulikfluid dienen. Insbesondere kann mindestens ein Kanalabschnitt in vertikaler Richtung, beispielsweise zentrisch durch das Lagerteil verlaufen und sich in einem zentrisch in dem Gleitschuh verlaufenden Kanalabschnitt fortsetzen, von dem aus das Hydraulikfluid auf die äußeren Drucktaschen verteilt wird.

In einer bevorzugten Weiterbildung weist der Gleitschuh mindestens einen Kanalabschnitt zur Versorgung der mindestens einen Drucktasche mit dem Hydraulikfluid auf, der nicht mit einem weiteren in dem Gleitschuh gebildeten Kanalabschnitt zur Versorgung mindestens einer weiteren Drucktasche verbunden ist. Es ist vorteilhaft (aber nicht zwingend notwendig), für die mittlere Drucktasche und für die in den Ecken der Gleitschuhoberfläche gebildeten Drucktaschen zwei getrennte Hydraulikversorgungen vorzusehen. Auf diese Weise kann der Druck in den äußeren Drucktaschen auf einen gewünschten Wert eingestellt werden, der unabhängig von dem Druck ist, der sich bei der Belastung der ersten Drucktasche durch die aufliegende Welle in der der mittleren Drucktasche bzw. der dieser zugeordneten Hydraulikversorgung einstellt.

Bei einer Ausführungsform weist der Gleitschuh mindestens eine Drossel zur Anpassung der Durchflussmenge des den Drucktaschen zugeführten Hydraulikfluids auf. In der Regel ist für jede äußere Drucktasche des Gleitschuhs eine Drossel zur Verengung des Strömungsquerschnitts vorgesehen.

Bei einer weiteren vorteilhaften Ausführungsform weist das Gleitlager eine Lagerhülse auf, die sich zur Verbindung des Lagerteils mit dem Gleitlagerkörper sowohl in einen in dem Lagerteil gebildeten Kanalabschnitt als auch in einen in dem Gleitschuh gebildeten Kanalabschnitt erstreckt. Mit Hilfe der Lagerhülse kann die Verbindung zwischen dem Lagerteil und dem Gleitschuh im Bereich eines zwischen diesen beiden Bauteilen gebildeten Spalts stabilisiert werden. Zusätzlich kann die Lagerhülse auch für die Trennung der beiden Hydraulikzuführungen zur mittleren Drucktasche bzw. zu den äußeren Drucktaschen dienen.

Bevorzugt ist zu diesem Zweck an der Außenseite der Lagerhülse sowohl in dem im Lagerteil gebildeten Kanalabschnitt als auch in dem im Gleitschuh gebildeten Kanalabschnitt mindestens eine Dichtung vorgesehen. Das Vorsehen einer (radialen) Dichtung zwischen der Hülse und der Innenwand des jeweiligen Kanalabschnitts ermöglicht es, den in axialer Richtung zwischen den beiden Dichtungen liegenden Bereich, in dem ein Spalt zwischen dem Lagerteil und dem Gleitschuh gebildet ist, hydraulisch von den beiden in vertikaler Richtung verlaufenden Kanalabschnitten zu trennen. Auch erfüllen die beiden radialen Dichtungen bei einer Relativbewegung zwischen Gleitschuh und Lagerteil eine Lagerfunktion.

In einer weiteren Ausführungsform ist zur Befestigung bzw. zur elastischen Lagerung des Gleitschuhs an dem Lagerteil mindestens ein elastisches Verbindungselement, insbesondere in Form einer Schraubenfeder, vorgesehen. Die (auf Druck beanspruchten) Federn erzeugen eine Rückstellkraft auf den Gleitschuh, wenn dieser bei der Lagerung der Welle eine Kippbewegung ausführt. Die Federn sind hierbei in Hohlräumen in dem Gleitschuh untergebracht, die in Lagerzapfen enden, die sowohl in dem Gleitschuh als auch durch das darunter liegende Lagerteil verlaufen. Die elastische Lagerung des Gleitschuhs an dem Lagerteil ermöglicht einer Kippbewegung des Gleitschuhs relativ zu dem Lagerteil, um axiale und/oder radiale Kräfte auszugleichen, die bei der Drehung der Welle auf den Gleitschuh ausgeübt werden. Die Hohlräume, in denen die Federn angebracht sind, enden an der Gleitschuhoberfläche und sind mit Hilfe von Stopfen verschlossen. Die Stopfen an der Gleitschuhoberfläche sind leicht zugänglich und können daher leicht mit einem Werkzeug (z.B. einem Sechskant) entfernt werden, falls der Gleitschuh gegen einen anderen Gleitschuh ausgetauscht werden soll. Dies kann z.B. erforderlich sein, wenn eine Welle mit anderem Durchmesser von dem Gleitlager unterstützt werden soll, da der Krümmungsdurchmesser des Gleitschuhs auf den Durchmesser der zu lagernden Welle abgestimmt sein muss.

Zur verkippbaren Lagerung des Gleitschuhs an dem Lagerteil dient ein Kipplager mit zwei Kipplagerteilen, welche sphärisch gekrümmte, aufeinander aufliegende Oberflächen (im Wesentlichen in Form von Halbschalen) aufweisen, wobei das erste Kipplagerteil an dem Lagerteil und das zweite Kipplagerteil an dem Gleitschuh gebildet ist. Die an dem ersten Kipplagerteil gebildete sphärische Oberfläche kann konkav gekrümmt sein, um eine im Wesentlichen halbkugelförmige, konvex gekrümmte Oberfläche des zweiten Kipplagerteils am Gleitschuh aufzunehmen, oder umgekehrt. Um die durch das Kipplager aufzunehmenden Kräfte zu reduzieren, kann ein zwischen dem Gleitschuh und dem Lagerteil gebildeter Spalt (bzw. eine Fläche, die typischer Weise größer ist als diejenige der darüber liegenden Drucktasche) mit einem Hydraulikfluid beaufschlagt werden, um das Kipplager hydraulisch zu entlasten.

Zur Führung der umlaufenden Welle kann an dem Gleitlager ferner mindestens ein Stützarm vorgesehen sein. Der Stützarm weist vorzugsweise einen Stützschuh mit einer gekrümmten Oberfläche zur Führung der Welle auf, der ebenfalls mit hydrostatischen Taschen versehen ist, um eine hydrostatische Lagerung zu bewirken. Um mit der gekrümmten Oberfläche des Stützschuhs eine seitliche Führung bzw. einen Druck auf die Welle auszuüben, ist der Stützschuh typischer Weise an einem in dem Stützarm verschiebbar geführten Lagerteil angebracht, wobei zur Verschiebung z.B. ein Hydraulik-Antrieb dienen kann.

In bevorzugter Ausgestaltung weist das Gleitlager zwei Stützarme auf. Die Stützarme sind dabei vorzugsweise symmetrisch zu der Mittelachse der gekrümmten Gleitschuhoberfläche angeordnet, sodass die umlaufende Welle von den zwei Stützarmen gleichmäßig abgestützt werden kann.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a,b: zwei perspektivische Darstellungen eines ersten Ausführungsbeispiels eines hydrostatischen Gleitlagers mit einem Gleitschuh und einem Gleitlagerkörper,
- Fig. 2a,b: zwei Seitenansichten des Gleitlagers von Fig. 1a,b,
- Fig. 3: einen Schnitt durch das Gleitlager entlang der vertikalen Schnittlinie A-A von Fig. 2a,
- Fig. 4: einen Schnitt durch das Gleitlager entlang der vertikalen Schnittlinie C-C von Fig. 2b,
- Fig. 5: einen Schnitt durch das Gleitlager entlang der horizontalen Schnittlinie E-E von Fig. 2b,
- Fig. 6: einen Schnitt durch das Gleitlager entlang der Schnittlinie H-H von Fig. 3,
- Fig. 7: ein zweites Ausführungsbeispiel eines erfindungsgemäßen Gleitlagers in perspektivischer Darstellung,
- Fig. 8a: einen Schnitt durch das Gleitlager von Fig. 7,
- Fig. 8b: ein vergrößerter Ausschnitt des Gleitlagers aus der Darstellung von Fig. 8a, und
- Fig. 9: einen weiteren Schnitt durch das Gleitlager aus Fig. 7.

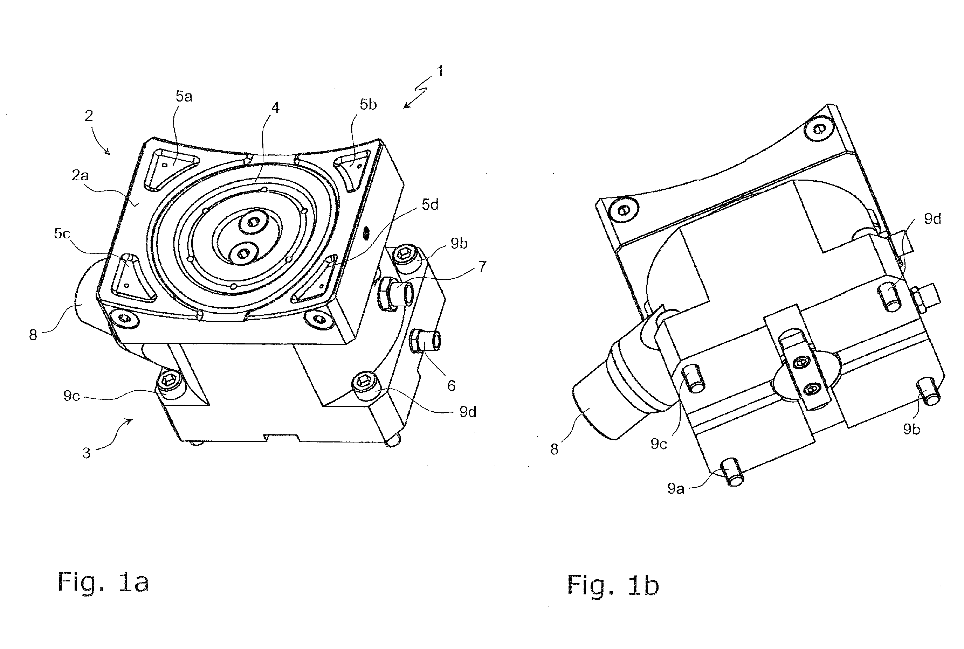

**Fig. 1a****,b** zeigt ein hydrostatisches Gleitlager 1 für die Lagerung einer umlaufenden (nicht gezeigten) Welle. Das Gleitlager 1 weist einen Gleitschuh 2 auf, der an einem Gleitlagerkörper 3 gelagert ist. Der Gleitschuh 2 weist eine Gleitschuhoberfläche 2a mit im Wesentlichen konstantem Krümmungsradius für die Auflage der Welle auf. An der in der Draufsicht rechteckigen Gleitschuhoberfläche 2a ist eine zentrische, kreis- bzw. ringförmige Drucktasche 4 gebildet, die von vier weiteren Drucktaschen 5a-d umgeben ist, welche in jeweils einer der vier Ecken der Gleitschuhoberfläche 2a angeordnet sind. Zur Versorgung der mittleren Drucktasche 4 mit einem Hydraulikfluid (typischer Weise mit einem Drucköl) ist an dem Gleitlagerkörper 3 ein erster, unterer Hydraulikanschluss 6 angebracht, über den eine Zuführung von Hydraulikfluid zu den äußeren Drucktaschen 5a-d erfolgt. Ein zweiter, oberer Hydraulikanschluss 7 dient der Zuführung eines Hydraulikfluids zu der mittleren Drucktasche 4. Durch die Beaufschlagung der Drucktaschen 4, 5a-d mit dem Hydraulikfluid kann zwischen der Welle und dem Gleitschuh 2 beim Betrieb des Gleitlagers 1 ein hydrostatisch tragender Schmierfilm ausbildet werden. In Fig. 1b sind vier am Fuß des Gleitlagerkörpers 3 angebrachte Schrauben 9a-d zu erkennen, welche über die Unterseite des Gleitlagerkörpers 2 hervorstehen und in (nicht gezeigte) Aufnahmen einer Unterlage für das Gleitlager 1 eingesetzt werden können.

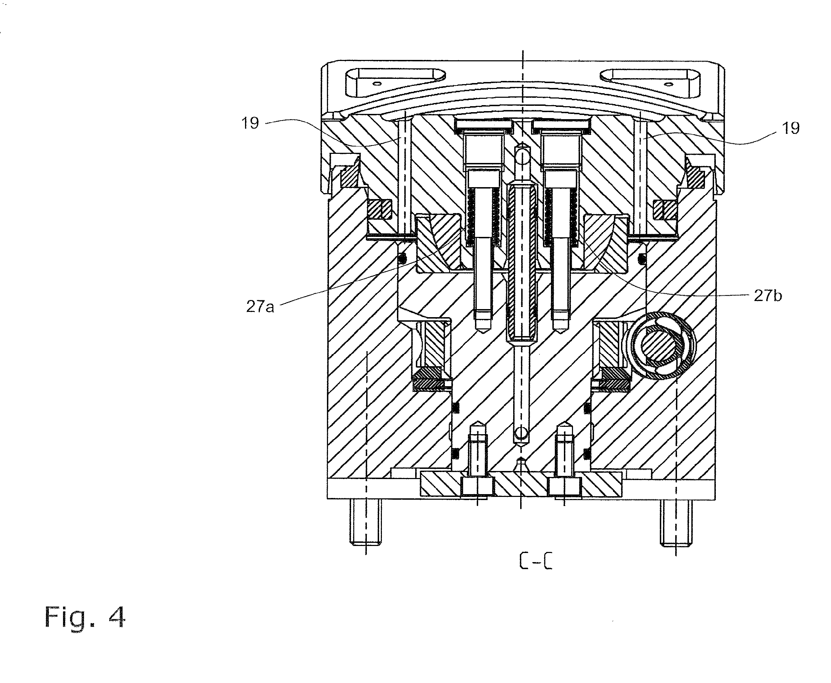

In Fig. 1 a,b ebenfalls zu erkennen ist ein seitlicher Anschlussstutzen 8 zur Kopplung des Gleitlagers 1 mit einem (nicht gezeigten) Drehantrieb, um eine Feinabstimmung der Bauhöhe des Gleitlagers 1, genauer gesagt eine Hubbewegung des Gleitschuhs 2 relativ zum Gleitlagerkörper 3 vorzunehmen. Die Hubbewegung erfolgt hierbei in einer Richtung, die nachfolgend als vertikale Richtung bezeichnet wird und die senkrecht zur planen Grundfläche des Gleitlagerkörpers 3 verläuft. Die Längsachse der von dem Gleitschuh 2 gelagerten Welle liegt hierbei in der vertikalen Verlängerung der Mittenebene des Gleitlagers 1 (entlang des in Fig. 4 gezeigten Schnitts C-C).

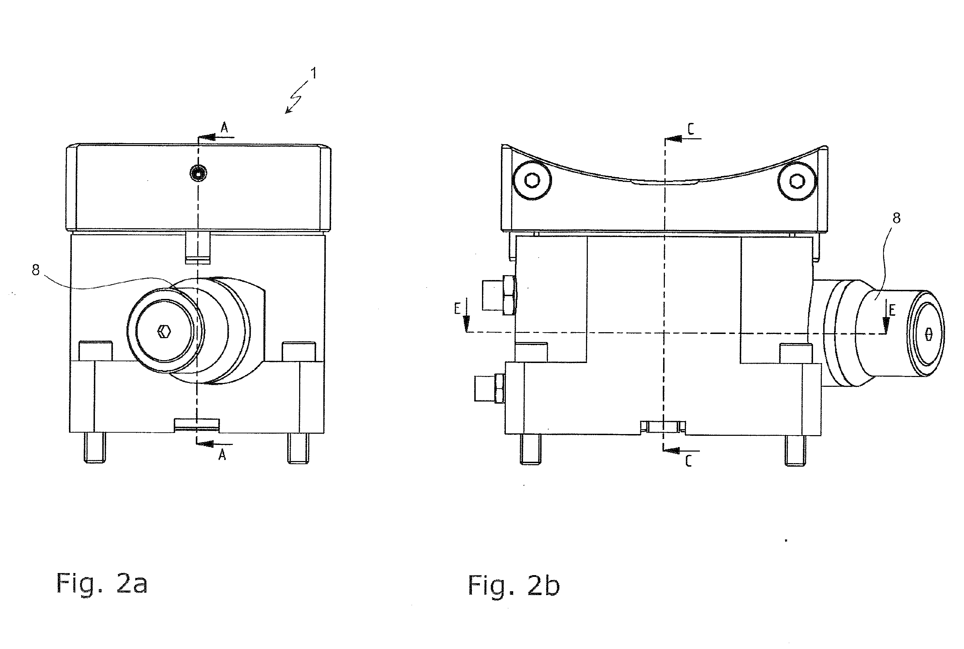

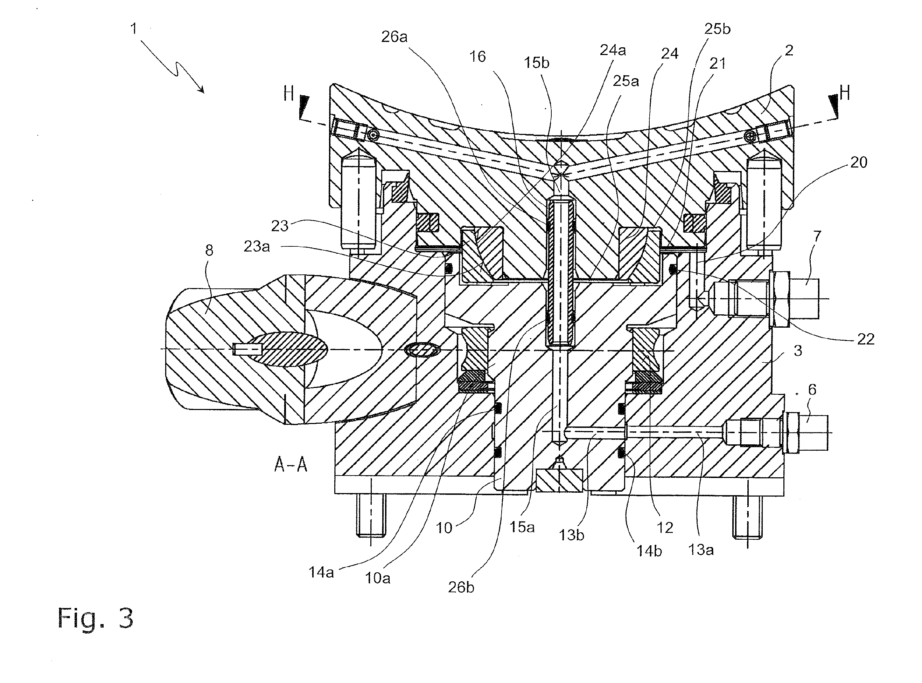

**Fig. 2a****,b** zeigt das Gleitlager 1 mit dem Anschlussstutzen 8 in einer Seitenansicht, wobei eine Sechskant-Öffnung des Anschlussstutzens 8 zur Verbindung mit einer motorseitigen Antriebswelle eines (nicht gezeigten) herkömmlichen Drehantriebs erkennbar ist. Der Mechanismus zur Anpassung der Bauhöhe des Gleitlagers 1 durch Erzeugen einer Hubbewegung zwischen dem Gleitlagerkörper 3 und dem Gleitschuh 2 wird nachfolgend anhand der Schnittdarstellungen von **Fig. 3** bis **Fig. 5** beschrieben, welche Schnitte durch das Gleitlager 1 entlang der in Fig. 2a,b gezeigten Schnittlinien A-A, C-C und E-E zeigen.

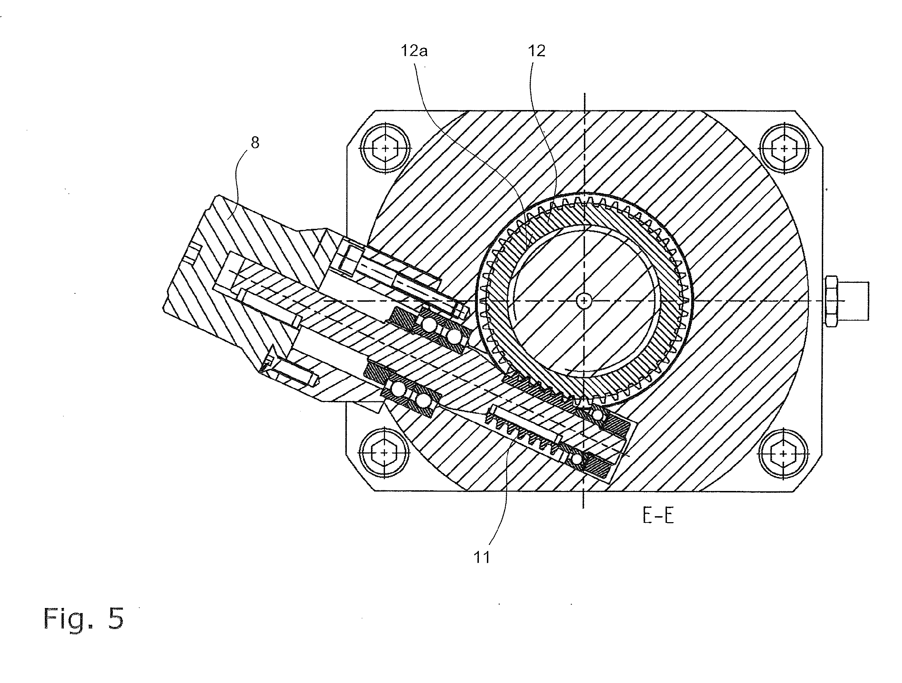

Wie in Fig. 3 zu erkennen ist, ist in dem Gleitlagerkörper 3 eine gestufte Öffnung vorgesehen, in der ein kolbenartiges Lagerteil 10 aufgenommen und in vertikaler Richtung geführt ist. An dem Lagerteil 10 ist der Gleitschuh 2 in einem Mittenabschnitt gelagert, so dass eine Verschiebung des Lagerteils 10 in vertikaler Richtung (bzw. in Richtung auf das Zentrum der gelagerten Welle) eine Höhenverstellung des Gleitschuhs 2 bewirkt. Zur Höhenverstellung des Lagerteils 10 dient eine mittels eines Drehantriebs antreibbare Gewindespindel 11 (vgl. Fig. 5), welche in einen das Lagerteil 10 umschließenden Zahnkranz 12 eingreift, um diesen um eine Mittenachse des Gleitlagers 1 bzw. des Lagerteils 10 zu drehen. Der Zahnkranz 12 weist ein Innengewinde 12a auf, welches in ein Außengewinde 10a eingreift, das an dem Lagerteil 10 gebildet ist, um dieses abhängig von der Drehrichtung der Gewindespindel 11 zum Zentrum der gelagerten Welle hin bzw. von diesem weg zu verschieben und somit die Bauhöhe des Gleitlagers 1 anzupassen.

Eine solche Anpassung kann z.B. erforderlich sein, wenn die durch das Gleitlager 1 zu unterstützende Welle an ihren beiden Enden eingespannt ist und sich aufgrund ihres Eigengewichts geringfügig durchbiegt. Aufgrund der Durchbiegung der Welle verändert sich die zur Unterstützung der Welle benötigte Bauhöhe des Gleitlagers 1 entlang der Längsachse der Welle, allerdings nur geringfügig, d.h. in der Größenordnung weniger Millimeter bzw. Zehntel-Millimeter. Die Adaptierung des Gleitlagers 1 an die an einer jeweiligen Position erforderliche Bauhöhe, kann durch die Erzeugung einer Hubbewegung des Gleitschuhs 2 relativ zum Gleitlagerkörper 3 von typischer Weise einem Millimeter oder weniger mittels der oben beschriebenen Hubeinrichtung 8, 11, 12 erfolgen. Die mit der Hubeinrichtung 8, 11, 12 eingestellte Höhe des Lagerteils 10 bzw. des Gleitschuhs 2 stellt hierbei einen variablen Endanschlag für den mit dem Gewicht der Welle beaufschlagten Gleitschuh 2 dar.

Die hier beschriebene Hubeinrichtung 8, 11, 12 ist so ausgelegt, dass bei einem maximalen Verschiebeweg im Bereich von ca. einem bis zwei Millimetern die Versorgung der Drucktaschen 4, 5a-d mit Hydraulikfluid über die Anschlüsse 6, 7 im Gleitlagerkörper 3 gewährleistet ist. Die in dem Gleitlagerkörper 3 gebildete gestufte Öffnung bildet einen unteren Endanschlag für die Hubbewegung. Ein oberer Festanschlag wird durch eine untere Leiste gebildet, die mit 2 Schrauben an dem Lagerteil 10 befestigt wird. gebildet. Zwischen den durch diese beiden Anschläge definierten Stellungen kann das Lagerteil 10 stufenlos in vertikaler Richtung verstellt und in der jeweiligen Stellung fixiert bzw. zugestellt werden.

Im vorliegenden Beispiel erfolgt die Versorgung der äußeren Drucktaschen 5a-d vom ersten Anschluss 6 aus durch ein System von Hydraulik-Kanälen (nachfolgend auch als Bohrungen bezeichnet). Zur Versorgung der äußeren Drucktaschen 5a-d steht der erste Anschluss 6 über einen horizontalen Bohrungsabschnitt 13a in dem Gleitlagerkörper 3 mit einem sich anschließenden horizontalen Bohrungsabschnitt 13b des Lagerteils 10 in Verbindung. Um ein Austreten von Hydraulikfluid zu verhindern bzw. um einen Druckaufbau zu gewährleisten, ist oberhalb und unterhalb des Übergangs zwischen den beiden Bohrungsabschnitten 13a,b jeweils eine umlaufende Radialdichtung 14a,b (O-Ring) vorgesehen. Der horizontale Bohrungsabschnitt 13b mündet in einen vertikalen Bohrungsabschnitt 15a, der in dem Lagerteil 10 gebildet ist, an den sich ein entsprechender vertikaler Bohrungsabschnitt 15b in dem am Lagerteil 10 gelagerten Gleitschuh 2 anschließt. Zur Verbindung der beiden gestuft ausgebildeten vertikalen Bohrungsabschnitte 15a,b ist eine Lagerhülse 16 vorgesehen, in deren Innenraum das Hydraulikfluid vom ersten Anschluss 6 zu dem Gleitschuh 2 geführt wird.

An den vertikalen Bohrungsabschnitt 15b schließen sich - wie aus **Fig**. **6** ersichtlich - in dem Gleitschuh 2 zwei weitere unter einem Winkel zur Horizontalen verlaufende Bohrungsabschnitte 17a, 17b an, welche das mittig durch den vertikalen Bohrungsabschnitt 15b eintretende Hydraulikfluid zu den beiden Seiten des Gleitschuhs 2 transportieren. An jeder Seite wird das Hydraulikfluid über zwei weitere Bohrungen zu jeweils zwei Drosseln 18a-d mit reduziertem Strömungsquerschnitt geführt, über die eine jeweilige äußere Drucktasche 5a-d mit dem Hydraulikfluid beaufschlagt wird.

Ein zweites, nicht mit dem ersten verbundenes System von Hydraulik-Kanälen dient zur Versorgung der mittleren Drucktasche 4 über den zweiten Anschluss 7. Auf diese Weise lassen sich das Druckniveau in den äußeren Drucktaschen 5a-d und in der mittleren Drucktasche 4 unabhängig voneinander einstellen. Die Fluid-Zuführung erfolgt hierbei ausgehend vom oberen Druckanschluss 7 zunächst über eine Vertikalbohrung 20 (vgl. Fig. 3) und gelangt von dort in einen zwischen dem Gleitlagerkörper 3 und dem Gleitschuh 2 bzw. zwischen dem Lagerteil 10 und dem Gleitschuh 2 gebildeten Spalt 21. Eine weitere Radialdichtung 22 zwischen dem Lagerteil 10 und dem Gleitlagerkörper 3 verhindert ein Eindringen von Hydraulikfluid in den Bereich mit der Gewindespindel 11 und dem Zahnkranz 12. Entsprechend erfolgt auch eine Abdichtung nach oben, d.h. zwischen dem Gleitlagerkörper 3 und dem Gleitschuh 2 über nicht näher bezeichnete Dichtungselemente. Über den Spalt 21 wird das Hydraulikfluid zu in dem Gleitschuh 2 gebildeten vertikalen Kanälen 19 (vgl. Fig. 4) geführt und tritt im Bereich der mittleren Drucktasche 4d an mehreren symmetrisch um die vertikale Mittelachse angeordneten Öffnungen aus (vgl. Fig. 1a).

Zusätzlich zur Beschickung der mittleren Drucktasche 4 hat das in dem Spalt 21 befindliche Hydraulikfluid noch eine weitere Funktion, die nachfolgend anhand von Fig. 3 erläutert wird: Das Hydraulikfluid gelangt aus dem Spalt 21 auch in den Bereich eines Kipplagers bzw. Kippgelenks 23, 24, welches eine Kippbewegung des Gleitschuhs 2 relativ zum Gleitlagerkörper 3 in einer beliebigen Richtung ermöglicht. Das Kipplager weist ein erstes, am Lagerteil 10 gebildetes Kipplagerteil 23 und ein zweites, am Gleitschuh 2 gebildetes Kipplagerteil 24 auf, die jeweils eine sphärisch (konkav bzw. konvex) gekrümmte Oberfläche 23a, 24a aufweisen, die aneinander anliegen, um eine gelenkige Verbindung zwischen dem Gleitschuh 2 und dem Lagerteil 10 zu realisieren. Um die auf dieses Kipplager 23, 24 von der Welle ausgeübten Kräfte zu reduzieren, wird das Hydraulikfluid in zwei horizontal verlaufende Spaltabschnitte 25a,b geleitet, wodurch das Kipplager 23, 24 von einem erheblichen Anteil der wirkenden Lagerkräfte (ca. 70 - 80 %) entlastet werden kann.

Der mit dem Hydraulikfluid beaufschlagte untere Spaltabschnitt 25a endet an der Lagerhülse 16 und zwei weitere zwischen der Lagerhülse 16 und der Innenwand des jeweiligen Bohrungsabschnitts 15a, 15b vorgesehene Radialdichtungen 26a,b dienen der Abdichtung gegenüber der Hydraulikversorgung für die äußeren Drucktaschen 5a-d. Die Radialdichtungen 26a,b dienen hierbei gleichzeitig als Lager bei Relativbewegungen zwischen dem Gleitschuh 2 und dem Lagerteil 10. Zur Befestigung des Gleitschuhs 2 an dem Lagerteil 10 sind zusätzlich zwei Schraubenfedern 27a,b vorgesehen (vgl. Fig. 4), welche auf Druck belastet sind und welche einer Verkippung des Gleitschuhs 2 aus seiner horizontalen Ausgangslage entgegen wirken. Die Schraubenfedern 27a,b sind in vertikale Bohrungen im Gleitschuh 2 integriert, welche mit nicht näher bezeichneten Stopfen an der Gleitschuhoberfläche 2a verschlossen sind. Zum Austausch des Gleitschuhs 2 können die Stopfen geöffnet und auf diese Weise die Verbindung zu dem Lagerteil 10 gelöst werden.

An Stelle einer mechanischen Höhenverstellung des Gleitschuhs 2 unter Verwendung der Gewindespindel 11 ist es auch möglich, eine Anpassung der Bauhöhe des Gleitlagers 1 auf andere Weise zu realisieren, beispielsweise durch ein Hydraulikfluid. In diesem Fall kann ggf. ein weiterer Hydraulik-Anschluss an dem Gleitlager 1 bzw. dem Gleitlagerkörper 3 vorgesehen werden und das Lagerteil 10 kann als Kolbenstange eines Hydraulik-Zylinders dienen, die zwischen zwei in dem Gleitlagerkörper 3 gebildeten Festanschlägen verschiebbar ist. Zu diesem Zweck kann beispielsweise der in Fig. 3 gezeigte Hohlraum, in dem die Gewindespindel 11 bzw. der Zahnkranz 12 angeordnet sind, mit einem Hydraulikfluid beaufschlagt werden. Allerdings ermöglicht eine solche Ausführung des Gleitlagers 1 eine präzise Höhenverstellung des Gleitschuhs 2 nur für den Fall, dass der Kolben seine beiden Endanschläge erreicht, aber kein präzises Zustellen bzw. Fixieren des Gleitschuhs 2 in den dazwischen liegenden Stellungen.

Alternativ oder zusätzlich zur Feinjustage der Bauhöhe des Gleitlagers 1 ist es für die Realisierung einer Hubbewegung auch möglich, das gesamte Gleitlager 1 auf eine Hubeinrichtung zu stellen, mittels derer die Höhe des Gleitschuhs 2 ebenfalls angepasst werden kann, wobei in diesem Fall ein größerer Hub von z.B. 0, 5 Meter oder darüber möglich ist. In diesem Fall kann auf das Vorsehen eines verschiebbaren Lagerteils 10 in dem Gleitlager ggf. vollständig verzichtet werden.

Es versteht sich, dass anders als weiter oben dargestellt gegebenenfalls an Stelle von zwei getrennten Hydraulikversorgungen für die mittlere Drucktasche 4 und die äußeren Drucktaschen 5a-d auch eine gemeinsame Hydraulikversorgung für alle an der Gleitschuhoberfläche 2a gebildeten Drucktaschen 4, 5a-d vorgesehen werden kann.

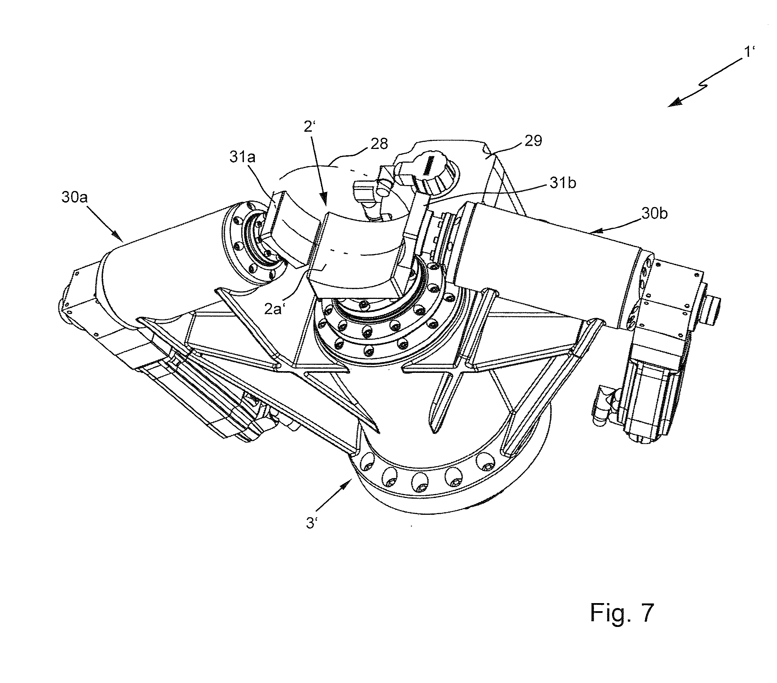

Fig. 7 zeigt eine perspektivische Darstellung eines weiteren Ausführungsbeispiels eines erfindungsgemäßen hydrostatischen Gleitlagers 1' für die Lagerung einer umlaufenden Welle. Die umlaufende Welle bzw. deren kreisförmiger Außenumfang ist in Fig. 7 durch eine strichpunktierte Linie 28 angedeutet. Das Gleitlager 1' weist einen Gleitschuh 2' mit einer Gleitschuhoberfläche 2a' mit im Wesentlichen konstantem Krümmungsradius zur Auflage der Welle 28 auf. Der Gleitschuh 2a' ist mechanisch relativ zu einem Gleitlagerkörper 3' heb- und senkbar, um die Bauhöhe des Gleitlagers 1' an die Lage der Welle 28 anzupassen. In Fig. 7 ist ebenfalls ein Dreh-Motor 29 als Antrieb für die mechanische Verstellung des Gleitschuhs 2' gezeigt, der neben dem Gleitlagerkörper 3' angeordnet ist. Zusätzlich zu dem Gleitschuh 2' sind zur Stützung der Welle zwei Stützarme 30a, 30b vorgesehen, die jeweils Stützschuhe 31 a, 31 b mit im Wesentlichen sphärisch gekrümmten Oberflächen zur seitlichen Abstützung der Welle 28 aufweisen.

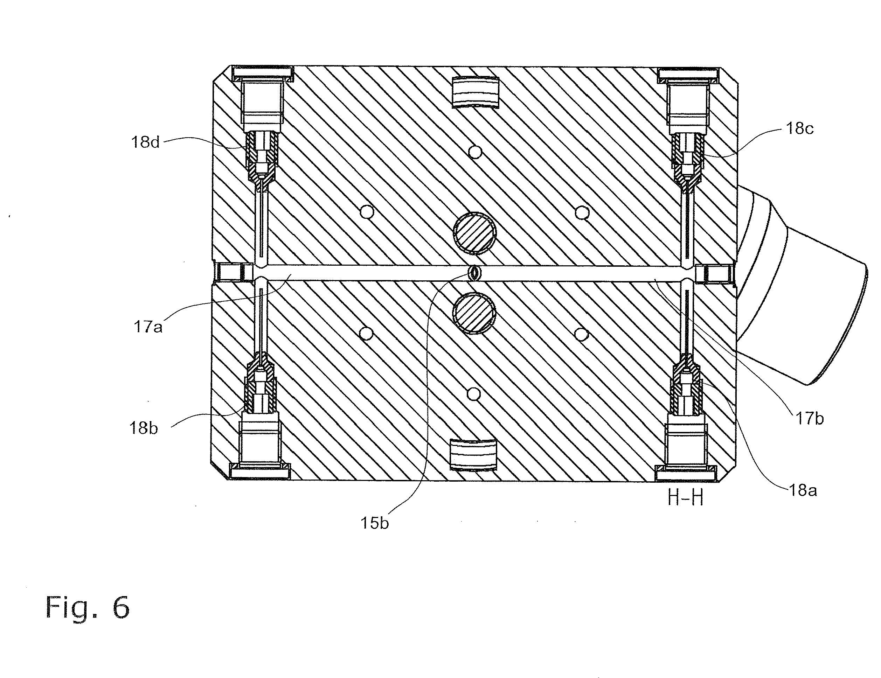

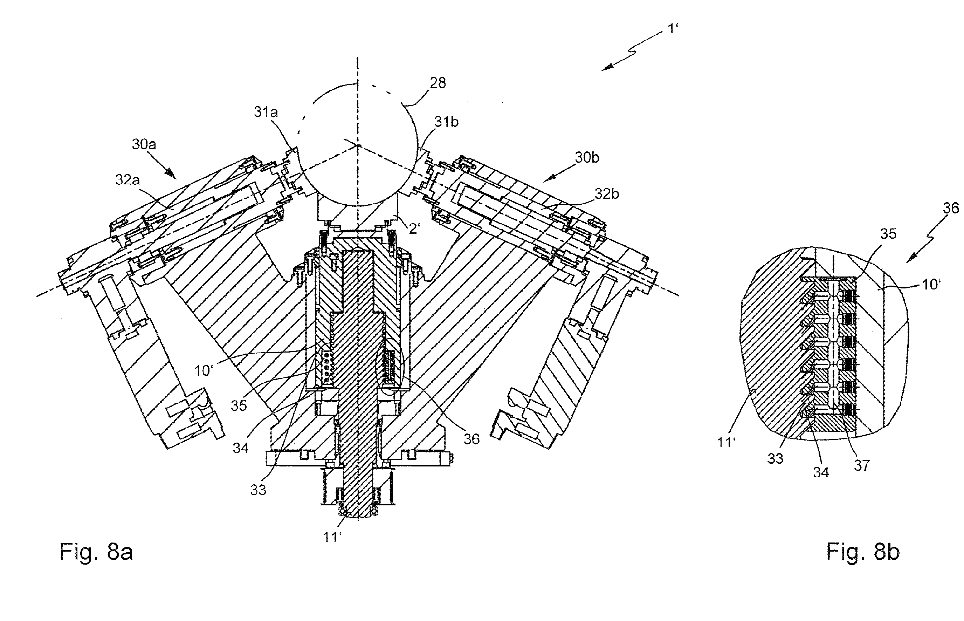

Die Abstützung der Welle 28 ist aus **Fig. 8a** ersichtlich, die eine geschnittene Frontansicht des Gleitlagers 1' zeigt. Die umlaufende Welle 28 wird durch den Gleitschuh 2' sowie die Stützschuhe 31 a, 31 b der Stützarme 30a, 30b gelagert. Die Stützschuhe 31 a, 31 b sind an Stützlagerteilen 32a, 32b gelagert, die in den Stützarmen 30a, 30b verschiebbar geführt sind, um die Stützschuhe 31 a, 31 b an die Welle 28 anzustellen. Die Verschiebung der Stützlagerteile 32a, 32b kann über einen hydraulischen Antrieb erfolgen, auf den zur Vereinfachung an dieser Stelle nicht näher eingegangen wird. Die Stützarme 30a, 30b sind zur Erhöhung der Stabilität des Gleitlagers 1' einteilig mit dem Gleitlagerkörper 3' ausgebildet. Im Gegensatz zu dem zuvor beschriebenen Ausführungsbeispiel gemäß den Figuren 1 bis 6 wurde aus Gründen der Übersichtlichkeit in Fig. 8a,b auf die Darstellung von Bauteilen zur Ausbildung eines hydrostatischen Schmierfilms zur Lagerung der Welle 28 sowie auf die Darstellung von Bauteilen zur Ausbildung eines Kipplagers (vgl. Fig. 3, Kipplagerteile 23, 24) verzichtet.

In dem Gleitlagerkörper 3' ist zentral eine sich in vertikaler Richtung erstreckende Gewindespindel 11' eingebracht, deren Außengewinde 33 in ein Innengewinde 34 eines Gewindeteils 35 (Spindel-Mutter) eingreift. Das Gewindeteil 35 ist in ein kolbenartiges Lagerteil 10' eingesetzt, das in dem Gleitlagerkörper 3' verschiebbar geführt ist. Durch eine Drehung der Gewindespindel 11' wird das Gewindeteil 35 angehoben oder abgesenkt und hierbei das Lagerteil 10' mitgenommen. An dem Lagerteil 10' ist der Gleitschuh 2' angebracht, so dass die Bauhöhe des Gleitlagers 1' an die Position der Welle 28 angepasst werden kann.

Die mit dem erfindungsgemäßen Gleitlager 1' abgestützte Welle 28 kann ggf. ein Gewicht von ca. 20 Tonnen oder mehr aufweisen, so dass der Gewindetrieb 34, 35, der einen Teil dieser Last aufnehmen muss, ggf. so stark belastet wird, dass die Flanken des Außengewindes 33 der Gewindespindel 11' und des Innengewindes 34 des Gewindeteils 35 bei einer Drehbewegung zerstört werden können, da die Reibung zu groß ist. Bei dem vorliegenden Gleitlager 1' ist für die Gewindespindel 11' bzw. das Gewindeteil 35 daher eine hydrostatische Lagerung vorgesehen, die in einem Bild-Ausschnitt bzw. Bereich 36 in Fig. 8b näher beschrieben wird.

**Fig. 8b** zeigt den Bereich 36 in einer vergrößerten Darstellung: Das Lagerteil 10' liegt auf dem Gewindeteil 35 (Spindel-Mutter) auf, das einen zentralen Kanal 37 zur Führung eines Hydraulikfluids (typischer Weise von Drucköl) aufweist, das dem Gewindeteil 35 über nicht gezeigte Öffnungen zugeführt wird. Das über den Kanal 37 geführte Hydraulikfluid wird in den Grenzbereich zwischen Gewindeteil 35 und Gewindespindel 11' geleitet, sodass ein Schmierfilm zwischen den Flanken des Außengewindes 33 und des Innengewindes 34 ausgebildet wird. Der Schmierfilm verringert die Reibung zwischen der Gewindespindel 11' und dem Gewindeteil 35 erheblich, so dass eine Hubbewegung des Gleitlagerschuhs 2' auch in dem Fall möglich ist, wenn das Gleitlager 1' bereits mit dem Gewicht der Welle 28 beaufschlagt ist. Das in den Spalt zwischen dem Außengewinde 33 und dem Innengewinde 34 einströmende Hydraulikfluid wird über (nicht gezeigte) Öffnungen oberhalb und unterhalb des Gewindeabschnitts der Gewindespindel 11' abgeführt.

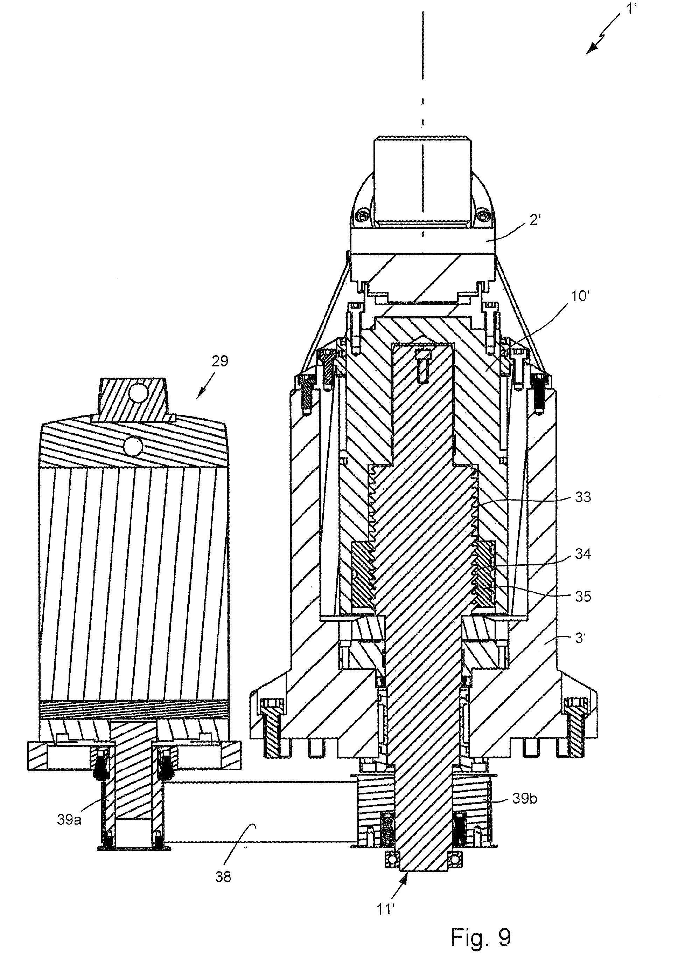

Der Antrieb der Gewindespindel 11' ist aus der geschnittenen Seitenansicht des Gleitlagers 1' gemäß **Fig. 9** ersichtlich. Der Antrieb umfasst dabei den Dreh-Motor 29, der über einen Riemen 38 die Gewindespindel 11' antreibt. Der Riemen 38 wird zwischen einer ersten Riemenaufnahme 39a an dem Dreh-Motor 29 und einer zweiten Riemenaufnahme 39b an der Gewindespindel 11' geführt. Die erste Riemenaufnahme 39a weist einen kleineren Durchmesser auf als die zweite Riemenaufnahme 39b, sodass eine Untersetzung der Motordrehung erfolgt.

Soll die Höhe des Gleitschuhs 2' verstellt werden, wird der Motor 29 durch eine (nicht gezeigte) Steuereinrichtung angesteuert. Der Motor 29 dreht die erste Riemenaufnahme 39a, deren Bewegung mittels des Riemens 38 auf die zweite Riemenaufnahme 39b übertragen wird. Die Drehbewegung wird von der Gewindespindel 11' in Zusammenwirkung mit dem Gewindeteil 35 in eine Linearbewegung umgesetzt, und stellt somit eine mechanische Hubeinrichtung dar, mit der das Lagerteil 10' und damit der Gleitschuh 2' relativ zu dem Gleitlagerkörper 3' anhebbar bzw. absenkbar ist.

## Patentansprüche

1. Hydrostatisches Gleitlager (1, 1') zur Lagerung einer umlaufenden Welle (28), mit einem Gleitschuh (2, 2'), der eine gekrümmte Gleitschuhoberfläche (2a, 2a') zur Auflage der Welle (28) aufweist, und mit einem Gleitlagerkörper (3, 3'),
wobei der Gleitschuh (2, 2') an einem in dem Gleitlagerkörper (3, 3') verschiebbar geführten Lagerteil (10, 10') gelagert ist,
**dadurch gekennzeichnet,**
**dass** das Gleitlager (1, 1') eine mechanische Hubeinrichtung (8, 11, 12, 11', 35) aufweist, mit der das Lagerteil (10, 10') relativ zum Gleitlagerkörper (3, 3') anhebbar und absenkbar ist.

2. Gleitlager nach Anspruch 1, **dadurch gekennzeichnet, dass** die Hubeinrichtung ein Getriebe (11, 12, 11', 35) aufweist.

3. Gleitlager nach Anspruch 2, **dadurch gekennzeichnet, dass** das Getriebe mindestens eine antreibbare Gewindespindel (11, 11') aufweist.

4. Gleitlager nach Anspruch 3, **gekennzeichnet durch** einen Zahnkranz (12), in den die Gewindespindel (11) eingreift, wobei der Zahnkranz (12) ein Innengewinde (12a) aufweist, das mit einem Außengewinde (10a) des Lagerteils (10) in Eingriff steht.

5. Gleitlager nach Anspruch 3, **gekennzeichnet durch** ein Gewindeteil (35) mit einem Innengewinde (34), in das die Gewindespindel (11') eingreift.

6. Gleitlager nach Anspruch 5, **dadurch gekennzeichnet, dass** das Gewindeteil (35) an der Gewindespindel (11') hydrostatisch gelagert ist.

7. Gleitlager nach einem der Ansprüche 3 bis 6, **dadurch gekennzeichnet, dass** die Gewindespindel (11, 11') direkt oder über einen Riemen (38) mit einem Antriebsmotor (29) koppelbar ist.

8. Gleitlager nach einem der vorhergehenden Ansprüche, **dadurch gekennzeichnet, dass** das Lagerteil (10) mindestens einen Kanalabschnitt (13b, 15a) zur Versorgung einer Drucktasche (5a-d) an der Gleitschuhoberfläche (2a) mit einem Hydraulikfluid aufweist.

9. Gleitlager nach Anspruch 8, **dadurch gekennzeichnet, dass** der Gleitschuh (2) mindestens einen Kanalabschnitt (15b, 17a,b) zur Versorgung der Drucktasche (5a-d) mit dem Hydraulikfluid aufweist, der nicht mit einem weiteren in dem Gleitschuh (2) gebildeten Kanalabschnitt (21) zur Versorgung mindestens einer weiteren Drucktasche (4) verbunden ist.

10. Gleitlager nach einem der vorhergehenden Ansprüche, **dadurch gekennzeichnet, dass** der Gleitschuh (2) mindestens eine Drossel (18a-d) zur Anpassung der Durchflussmenge eines Hydraulikfluids aufweist, das einer an der Gleitschuhoberfläche (2a) gebildeten Drucktasche (5a-d) zugeführt wird.

11. Gleitlager nach einem der vorhergehenden Ansprüche, **gekennzeichnet durch** eine Lagerhülse (16), die sich zur Verbindung des Gleitschuhs (2) mit dem Lagerteil (10) sowohl in einen in dem Lagerteil (10) gebildeten Kanalabschnitt (15a) als auch in einen in dem Gleitschuh (2) gebildeten Kanalabschnitt (15b) erstreckt.

12. Gleitlager nach Anspruch 11, **dadurch gekennzeichnet, dass** an der Außenseite der Lagerhülse (16) mindestens eine Dichtung (26a, 26b) zur Abdichtung des jeweiligen Kanalabschnitts (15a, 15b) gebildet ist.

13. Gleitlager nach einem der vorhergehenden Ansprüche, **dadurch gekennzeichnet, dass** zur Befestigung des Gleitschuhs (2) an dem Lagerteil (10) mindestens ein elastisches Verbindungselement (27a, 27b) vorgesehen ist.

14. Gleitlager nach einem der vorhergehenden Ansprüche, **gekennzeichnet durch** ein Kipplager mit zwei Kipplagerteilen (23, 24) mit sphärisch gekrümmten, aufeinander aufliegenden Oberflächen (23a, 24a), wobei das erste Kipplagerteil (23) an dem Lagerteil (10) und das zweite Kipplagerteil (24) an dem Gleitschuh (2) gebildet ist.

15. Gleitlager nach einem der vorhergehenden Ansprüche, **gekennzeichnet durch** mindestens einen Stützarm (30a, 30b), insbesondere zwei Stützarme (30a, 30b), zur Führung der umlaufenden Welle (28).
